(19) **Europäisches Patentamt**
**European Patent Office**
**Office européen des brevets**

(11) **EP 3 339 653 B1**

(12) **EUROPEAN PATENT SPECIFICATION**

(45) Date of publication and mention
of the grant of the patent:
**07.07.2021 Bulletin 2021/27**

(51) Int Cl.:
***F04D 25/16*** *(2006.01)*   ***F04D 27/02*** *(2006.01)*

(21) Application number: **16205629.5**

(22) Date of filing: **21.12.2016**

(54) **COMPRESSOR CONTROL DURING POWER SUPPLY SYSTEM DISTURBANCES**

VERDICHTERSTEUERUNG BEI STÖRUNGEN DER SPANNUNGSVERSORGUNG

COMMANDE DE COMPRESSEUR LORS DE PERTURBATIONS DU SYSTÈME D'ALIMENTATION
ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.06.2018 Bulletin 2018/26**

(73) Proprietor: **ABB Schweiz AG
5400 Baden (CH)**

(72) Inventors:
• **BESSELMANN, Thomas
5413 Birmenstorf (CH)**
• **CORTINOVIS, Andrea
8953 Dietikon (CH)**
• **MERCANGOEZ, Mehmet
AG 4332 Stein (CH)**

(74) Representative: **Kransell & Wennborg KB
P.O. Box 27834
115 93 Stockholm (SE)**

(56) References cited:
**WO-A1-2007/030176**

• **BESSELMANN THOMAS ET AL: "Partial torque
ride through with model predictive control", 2016
PETROLEUM AND CHEMICAL INDUSTRY
CONFERENCE EUROPE (PCIC EUROPE), PCIC
EUROPE, 14 June 2016 (2016-06-14), pages 1-8,
XP032988000, DOI:
10.1109/PCICEUROPE.2016.7604647 [retrieved
on 2016-10-20]**
• **WYMANN TINO ET AL: "Power loss ride-through
in a variable speed drive system", 2014
PETROLEUM AND CHEMICAL INDUSTRY
CONFERENCE EUROPE, PCIC EUROPE
ORGANIZATION, 3 June 2014 (2014-06-03), pages
1-9, XP032643977, DOI:
10.1109/PCICEUROPE.2014.6900057 [retrieved
on 2014-09-16]**

**Description**

FIELD OF THE INVENTION

The invention relates to compressor stations. The invention more particularly concerns a method, control arrangement and computer program product for controlling a group of compressors in a compressor station, powered by an electrical power supply system, in case of disturbances in the electrical power supply system.

BACKGROUND OF THE INVENTION

Compressors are known to be used in a number of different environments, where examples are in the transportation of oil and gas and in refrigeration systems.

In such systems it is also known to have the compressor operated by an electrical variable speed drive (VSD), where the variable speed drive is able to provide drive torques to the compressor.

A converter station comprising such compressors, motors and variable speed drives is often being powered by power from an electrical power supply system such as an electrical grid.

Moreover, in such an electrical system there may occur disturbances such as voltage dips and frequency deviations. These disturbances may be caused by various types, of power supply system faults, such as ground faults. Such faults may occur because of natural forces such as flooding, trees falling on overhead lines etc. A disturbance may be detected through monitoring a system quantity such as voltage and detecting a deviation, such as a voltage dip, or a frequency deviation.

Such disturbances may be very short in the electrical system. However a compressor that is not operated properly because of a short-lived disturbance may enter into a so-called surge condition. If this happens then the resuming of ordinary operation may be difficult and time consuming.

There have previously been made investigations with regard to operating compressors when there are different disturbances in power supply systems.

Wymann et al: "Power loss ride-through in a variable speed drive system", PCIC Europe AM-07. IEEE, 2014 does for instance discuss fault-ride through of equipment, such as compressors, being driven by variable speed drives. The document discusses three fault ride-through approaches: zero-torque ride through, full torque ride through and reduced torque ride through. The focus is on how to handle a disturbance for one piece of equipment.

US 2010/0257895 discloses a gas liquefaction plant comprising a power generation module comprising a number of turbine sets and where refrigerant compressors are driven by drive motors. In normal operation the power necessary for rated demand is provided through partial or full-load operation of all turbine sets. However, when an overall instantaneously available load reserve that can be achieved by frequency regulation of the compressors is smaller than the power demand of the largest compressor and a compressor fails or a rate of frequency change exceeds a prescribed limit, then at least one turbine is shut down. There is also a discussion about turning off a compressor if a "power reserve" is insufficient.

In the article "Partial torque ride through with model predictive control" by Besselmann Thomas et al, 2016 Petroleum and Chemical Industry Conference European (PCIC) Europe, 14 June 2016, the use of model predictive control (MPC) for controlling a variable speed drive (LCI) during grid disturbances is described.

As has been discussed initially there are often several compressors in a compressor station. It is therefore necessary to consider the whole group when deciding on how the compressors are being operated in case of grid disturbances.

Aspects of the invention are directed towards such an overall approach on handling power supply system disturbances that affect the operation of a group of compressors.

However, there is still a need for improvement within the field.

SUMMARY OF THE INVENTION

It is therefore an objective of the invention to improve the obtaining of reliable data during process control in order to provide improvements in relation to the model used in the control.

This object is according to a first aspect of the invention achieved through a method for controlling a group of compressors in a compressor station, powered by an electrical power supply system, in case of disturbances in the electrical power supply system, each compressor being run by an electrical variable speed drive providing a drive torque for the compressor, the method comprising the steps of

determining a total available power for the variable speed drives during a disturbance in the electrical power supply system, and

selecting a number of drive torques for operating at least some of the compressors during the disturbance, such that the power used for obtaining the selected drive torques is within the total available power, and selecting a number of compressors to shut down during the disturbance.

A second aspect of the invention is directed to a control arrangement for controlling a group of compressors in a compressor station, powered by an electrical power supply system, in case of disturbances in the electrical power supply system, each compressor being run by an electrical variable speed drive providing a drive torque for the compressor, said control arrangement comprising a main control unit operable to: determine a total available power for the variable speed drives during a disturbance in the electrical power supply system, and
select a number of drive torques for operating at least some of the compressors during the disturbance, such that the power used for obtaining the selected drive torques is within the total available power, and selecting a number of compressors to shut down during the disturbance.

A third aspect of the invention is directed to a computer program product for controlling a group of compressors in a compressor station, powered by an electrical power supply system, in case of disturbances in the electrical power supply system, each compressor being run by an electrical variable speed drive providing a drive torque for the compressor, the computer program product comprising a data carrier with computer program code being loadable into one or more internal memories associated with one or more processors, said computer program code causing said one or more processors to, when being loaded in said one or more internal memory,
determine a total available power for the variable speed drives during a disturbance in the electrical power supply system, and
select a number of drive torques for operating at least some of the compressors during the disturbance, such that the power used for obtaining the selected drive torques is within the total available power, and selecting a number of compressors to shut down during the disturbance.

The invention according to these aspects has a number of advantages. It provides an overall approach on handling power supply system disturbances that affect the operation of a group of compressors. Thereby it is possible to obtain a better compressor station utilization and avoid unnecessary stoppages.

BRIEF DESCRIPTION OF THE DRAWINGS

The subject matter of the invention will be explained in more detail in the following with reference being made to preferred exemplary embodiments which are illustrated in the attached drawings, of which:

Fig. 1 schematically shows a simplified compressor station with compressors being operated by variable speed drives and powered by an electrical power supply system,
Fig. 2 schematically shows a single electrically driven gas compressor,
Fig. 3 shows a flow chart outlining a number of method steps of a method of controlling a group of compressors according to a first embodiment,
Fig. 4 shows a simplified model of the electrical power supply system used in a variation of the first embodiment as well as in a second embodiment,
Fig. 5 shows a flow chart outlining the principles of use of mathematical models according to the variation of the first embodiment and in the second embodiment,
Fig. 6 shows a flow chart of overall compressor control according to a third embodiment,
Fig. 7 shows a flow chart outlining compressor control at an individual compressor according to the third embodiment, and
Fig. 8 schematically shows a computer program product comprising computer readable code which implements the excitation arrangement when loaded into a computer.

DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practised in other embodiments that depart from these specific details. In other instances, detailed descriptions of well known devices, circuits, and methods are omitted so as not to obscure the description of the present invention with unnecessary detail.

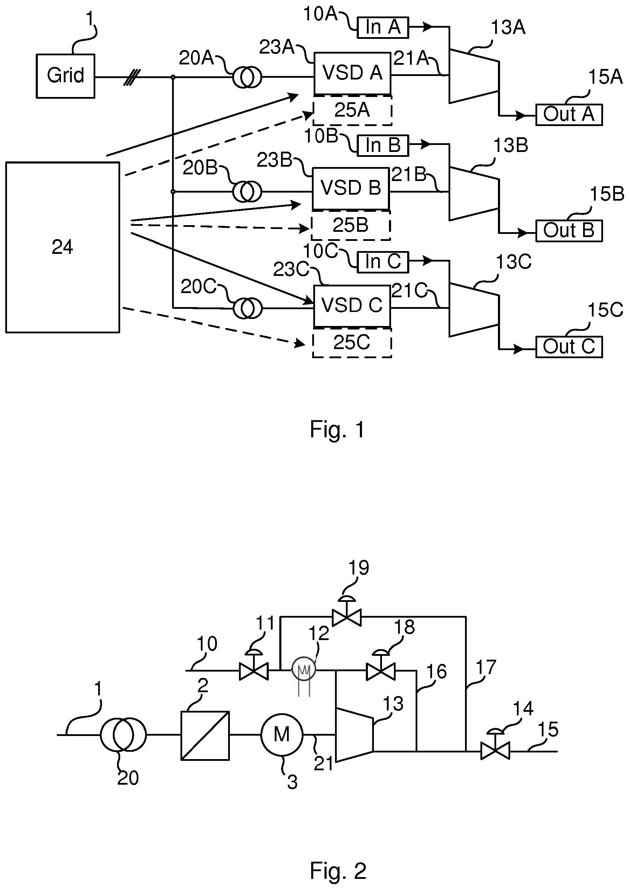

Fig. 1 schematically shows an electric compressor station 10 for compressing a gas, for instance a natural gas, and as an example comprising three compressors 13A, 13B and 13c. where each compressor 15A, 15B, 15C compresses gas from an inflow 10A, 10B and 10C to an outflow 15A,15B and 15C while increasing the gas pressure. Depending on the compressor station the inflows and outflows, which are separate in fig. 1, can also be connected. Each compressor is mounted on a drive shaft 21A, 21B and 21C and is powered by a variable speed drive (VSD) 23A, 23B 23c comprising e.g. a synchronous machine supplied by a load commutated converter, which is often a load commutated inverter (LCI). On the electric side, the variable-speed drives 23A, 23B and 23C are connected to a power supply network, via optional transformers 20A, 20B and 20c. The power supply network is in this example an electric grid 1, such as an electric power distribution grid.

In fig. 1 there is also a main control unit 24 or central controller shown as sending control signals (solid arrows) directly to the variable speed drives 23A, 23B and 23C as well as receiving information from and sending control information (dashed bi-directional arrows) to local variable speed drive control units 25A, 25B and 25C or local controllers, where the local control units control the variable speed drives 23A, 23B, 23C (shown as dashed arrows). It should here be realized that the direct control by the main control unit and distributed control by the local control units are alternatives in the control of the compressor station. Therefore the local control units may be optional

Each control unit 24, 25A, 25B, 25C may be realized as a processor with associated program memory comprising computer instructions implementing compressor control functionality when being run by the processor. As an alternative it is possible that a control unit is implemented using different types of hardware such as field-programmable gate arrays (FPGAs) or Application-Specific Integrated Circuits (ASICs).

The main control unit is also part of a control arrangement, which in one variation only comprises the main control unit. However, when local control units are employed these are also a part of the control arrangement. In this case the control arrangement comprises the main control unit and the local control units.

It should be realized that the number of compressors shown in the compressor station 10 is merely an example and that the station may readily comprise more or fewer compressors.

Fig. 2 schematically shows one way of realizing a variable speed drive and compressor being powered via the grid 1 and transformer 20. The variable speed drive comprises a converter 2 and a motor 3. The converter 2, such as a voltage source converter for instance a voltage source converter that may be an AC/AC converter, connected between the transformer 20 and the motor 3, which motor 3 has the drive shaft 21 to which the compressor 21 is connected. Natural gas coming from the inlet header 10 or inlet is passing through a suction valve 11 and a cooler 12. The gas is then compressed in the compressor 13 and either discarded through an outlet valve 14 and an outlet header line 15 or outlet or recirculated through two recycle paths 16 and 17. In case of hot recycling the gas flows through a recycle path 16 and a hot recycle valve 18 back in the inlet of the compressor. Similarly a cold recycle path 17 and a cold recycle valve 19 are used in case of cold recycle. While the rather slow cold recycle valve 19 is opened or closed continuously to set a point of operation of the compressor and for surge protection, the quicker hot recycle valve 18 can only be fully closed or fully opened, to short-circuit the inflow and the outflow of the compressor. It is important to highlight that in most compressor station designs the hot recycle valve 18 cannot be closed within a short amount of time once it has been opened. Moreover, the compressor station 10 cannot continue to operate with the hot recycle valve 18 open due to the rapid increase in temperature from recycling of compressed and therefore heated gas. Firing the hot recycle valve 18 thus corresponds to stopping the compressor operation and therefore requires a lengthy restarting procedure.

As was mentioned initially, there may occur disturbances in the electrical power supply system or grid 1. There may occur disturbances that manifest themselves through system quantity deviations, such as voltage dips. Such disturbances may have severe consequences on the compressors of a compressor station.

Electric powered gas compression stations are thus vulnerable to disturbances of the electric grid 1 supplying the compressor station 10 as they appear during grid faults. Such faults may be caused by bad weather such as winter storms but other causes are also possible. In many instances grid disturbances constitute voltage dips, also known as brown-outs, power loss or voltage sag. It is distinguished between symmetric voltage dips, which affect all phases equally, and asymmetric voltage dips, which affect the phases to different extent. In contrast to gas turbines, a drop out of a variable speed drive can cause a loss of drive torque within some tens of milliseconds.

While the grid power might be affected by the disturbance for only a fraction of a second, this time can be enough for compressors to enter so-called surge since the loss of drive torque leads to reduced compressor speed and consequently to reduced mass flow through the compressor.

Prerequisites for surge are a low mass flow and a high ratio between the pressures at the inflow and the outflow of the compressor when the developed compressor head drops below the network resistance. Under these circumstances fluctuations of the gas flow and pressure develop, up to the point of flow reversal. Surge comes with a range of possible adverse effects such as overheating, increased wear or mechanical damage of the machines and of the surrounding piping system. Surge events can be violent enough to damage a compressor in a few cycles and as a consequence the avoidance of surge is a strict safety requirement for compressor protection systems.

Stopping the compressor operation is costly, due to the high value of the processed gas. A loss of a single compressor can have an impact on the operation of the whole compressor station.

Mainly in upstream processes there may exist a need to ensure that the overall station conditions are kept within operable limits or otherwise the whole station 10 may have to be shut-down if these operable limits are violated. Since it can take hours or even days to ramp up the operation of a compressor station, a single trip of a bottleneck compressor station can result in large losses, when during the downtime gas in the worth of millions of dollars cannot be processed.

The present invention is concerned with handling such disturbances on a system level, i.e. with a view of operating the group of the compressors in an efficient manner.

The problem may therefore be seen as to, in case of a power supply system disturbance such as an undervoltage situation, distribute the remaining power supply system power (grid power) to the compressors as efficiently as possible such that as many compressors as possible can continue their operation without entering surge conditions.

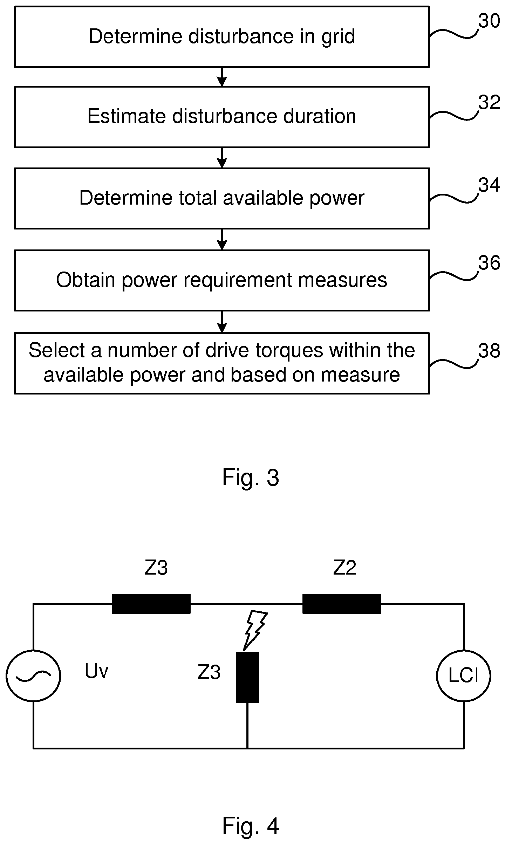

How this may be done according to a first embodiment will now be described with reference being made also to fig. 3, which shows a flow chart of a number of method steps in a method of controlling the group of compressors being performed by the main control unit 24.

A control unit responsible for determining that there is a disturbance in the power supply system and for acting on the disturbance, such as the main control unit 24 or the local control units, may receive one or more physical quantities of the power supply system, such as the voltage and current of the grid 1 delivered to the compressor station 10 either on a per compressor basis or as a whole. The power supply system physical quantity data may also comprise frequency information. Furthermore, the disturbance determining control unit 24 may determine a measure of power requirements for continuing operation during the disturbance. In order to determine such a measure, operational data of at least compressors and the compression process, such as the state of the compressors or compression process, like rotational shaft speeds and mass flow and pressure ratio a may be used. Such data may be collected by the local control units 25A, 25B and 25C for use by the disturbance determining control unit.

The data collected by the disturbance determining control unit may then be used to investigate if there are disturbances in the power supply system. Optionally this data may also be used for determining how a disturbance is to be handled.

The method may therefore involve a disturbance determining control unit, such as the main control unit 24 or a local control unit 25A, 25b, 25C, determining that there is a disturbance in the electrical power supply system, step 30. This may be done through determining that there is a voltage dip below a certain voltage dip threshold, through determining that there is a current below a current supply threshold or through determining that there is a frequency difference between the frequency and the nominal frequency above a frequency difference threshold. The determination may be determination per-phase and/or a determination considering all phases. There may in this case also be made an estimation of the length of the disturbance, step 32. Such an estimation may be made based on the lengths of previously determined disturbances or the use of a mathematical model of the power supply system.

For a disturbance, such as a voltage dip, there is also a determination of a total available amount of power for the variable speed drives during a disturbance, step 34. This determination is made by the main control unit 24. This determination may involve analysing the disturbance, such as analysing the amount with which the quantity deviates from a nominal value. It may therefore comprise investigating the power supply system quantities and based on the values of these and optionally also based on knowledge about available power at previous disturbances an available amount of total power may be estimated. It is possible that the total available power may be determined through applying one or more of the power supply system measurements in the mathematical model of the power supply system. The total amount of available power may optionally be translated into a total amount of torque available through the variable speed drives. The total amount of torque or the total amount of power may then be determined based on individual determinations of each of the variable speed drives. In such a determination it is for instance possible to use an MPC model based on a function describing the dynamic behaviour of the electrical system and a function describing how the system outputs depend on the states and inputs of the electrical system, as described in WO 2015/028242. Moreover, it is also possible to estimate the duration of the disturbance, for instance through investigating historical data or through prediction made using the mathematical model of the power supply system. It is also possible that the determination of total available power is made beforehand, i.e. before a disturbance actually occurs, for a number of different possible disturbance scenarios. These scenarios may be based on historical disturbance data and may relate the amount of deviation of a power supply system quantity from a nominal value to an estimated total power that is available during a disturbance occurring during a corresponding estimated length of time.

Furthermore, it is also possible that an estimation is made, by the disturbance determining control unit, of a measure, for each compressor, for continuing operation during the disturbance. This may be done through investigating current operating conditions, and determine a measure that identifies a limit at which a compressor fails to operate given the current operating conditions. In variations of the invention such a measure may be a dynamic or static time to surge or a surge distance based on the current operating conditions. A dynamic time to surge would consider variations of the drive torque in reaching surge, while a static may calculate a value for a fixed torque, such as zero torque. For this it is possible that compressor operation point data such as current shaft speeds, mass flow, pressure ratio are obtained and used to determine a minimum amount of torque required to operate a compressor for avoiding failure during the estimated disturbance duration. Also in this case it is possible to use heuristics of previous operations as well as to apply the compressor operational data in a mathematical load side model. The determination may be based on a prediction made using the above mentioned operating point parameters. The determining of the time to surge may be dynamic through maximizing's the time to surge during MDC control When the total available power is one of a number of different possible earlier determined disturbance scenarios, the determination of a measure may be the determining of static time to surge or a surge distance for a zero torque.. The main control unit 24 therefore obtains such measures, step 36, either through estimating them itself or through receiving them from the local control units.

A number of drive torques for operating at least some of the compressors during the disturbance are then selected based on the continued operation power requirement measures, step 38, which selection is made by the main control unit 24. Thereby the decision is at the same time a decision about how many and which compressors that are to be shut down. The decisions on the shut-down and/or the torque references are thus based on at least one process quantity on the load side, where the process quantity may be surge distance, static time to surge, dynamic time to surge and/or compressor operating point of that specific compressor-drive train. Moreover, the selected drive torques have to be obtainable using the amount of available power. The power used by the drives for obtaining the selected drive torques thus has to be within the total available power. The selection may as an alternative be the selection of variable torques that are above a minimum surge value threshold, such as above a minimum time to surge value or above a minimum surge distance. It is also possible that the surge related values that are found to be above thresholds are maximised. The criterion may be to select the drive torques for corresponding compressors that have the highest time to surge values and that can be operated within the total available power.

The number of drive torques selected may therefore be less than the total number of drive torques required for operating all the compressors. This means that it is possible that one or more drive torques are not selected and thereby a limited number of compressors may be shut down. The process of determining total available power, obtaining measures of continued operation power requirements and selecting of drive torques may be continued for the duration of the disturbance.

It can thereby be seen that references for the drive torques of the variable speed drives powering the compressors in a compression station are selected in the case of grid disturbances such as voltage dips. The references may be new references or modifications of previously used references. The decision on the drive torque references may take into account the current state of the compressor, when a voltage dip is occurring, and the amount of available drive torque based on electric quantities such as the grid voltage. Taking these measurements into account, the drive torque reference selection could be based on heuristic rules such as

- Even without drive torque, the compressor will not enter surge conditions before a given amount of time, thus no drive torque is applied by the VSD.

- By applying a certain drive torque, the compressor will not enter surge conditions before a given amount of time, and this drive torque is available under the prevalent grid conditions, thus this drive torque is applied by the VSD.

- Even by applying the maximally available drive torque, the compressor will enter surge conditions in a given amount of time, and thus a shut-down decision is taken and the hotgas recycle valve will be fired. No drive torque is applied to this compressor in order to increase the available torque for the other compressors and thus increase their chances of avoiding a trip.

- Depending on the voltage dip depth, a predefined number of compressors is shut-down, whereas the maximally available drive torque is applied to the remaining ones.

As can be seen above it is also possible that the decision on shut-down and drive torque reference may be calculated by means of:

(a) A mathematical model of the load side, which relates the point in time, when the compressor enters surge conditions with the drive torque depending on the current operating point of the compressor. In the ideal case interactions between the compressors due to connections of the inflow or the outflow are also represented by the mathematical model.

(b) A mathematical model of the line side, which is used to determine the maximally available drive torque as a function of measured electric quantities. In the ideal case, this line side model also comprises interactions between the variable-speed drives, i.e. relates the drive torque selected for one compressor with the drive torque available for the other compressors. The mathematical model of the line side of the VSD establishes a relationship of the operation point of one VSD with the available drive torque of another VSD. This model may also contain assumptions about the evolution of electric quantities such as the grid voltage or the available grid power over a finite time horizon. These assumptions may stem from an analysis of measurements gained from previous grid disturbances and might contain information such as length, type and/or shape of the grid disturbance.

The torque reference of one or multiple VSDs may be selected by optimizing a cost function, such as a function reflecting the probability of shutting down compressors during the disturbance.

A simplified equivalent model is provided in Figure 4, to illustrate the main effects during a grid fault. The equivalent model comprises a voltage source Uv having a first end connected to a first end of a load in the form of the LCIs via a first impedance Z1 in series with a second impedance Z2, where a third impedance Z3 has a first end connected to the junction between the first and second impedances Z1 and Z2 and a second end connected to second ends of both the voltage source Uv and the load. The load is here the compressor station in the form of the load commutated inverters (LCIs). In the figure a fault is also shown as occurring at the junction between the first, second and third impedances Z1, Z2 and Z3. The model can represent a single or multiple phases of the electric grid. When a grid fault occurs, an electric path in parallel to the gas compressor station is established, thereby reducing the grid voltage and the amount of power available for the variable speed drives. The precise reduction of the voltage at the variable speed drive depends on the impedances between the variable-speed drive and the power generation, the impedance in the line of fault, and the internal impedance of the variable-speed drive, which is determined by the operating point. If several variable speed drives are operated in parallel, the operating point of one variable speed drive will have an impact on the grid voltage at the other variable speed drives, and thus on the available drive torque.

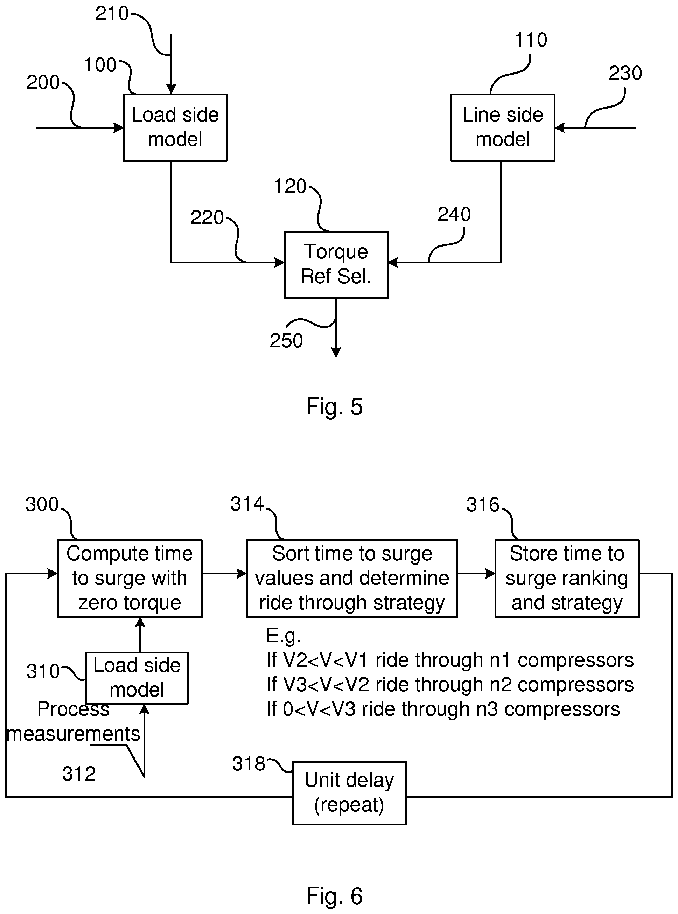

The principle behind the use of different mathematical models is shown in a flow chart in fig. 5: A load side model **100** is used to determine the drive torque **220** necessary to avoid surge conditions for a time interval **210**, based on the process signals **200**, i.e. based on the various power system property measurements. A line side model **110** is used to determine the available drive torque **240** as a function of electric signals **230**. Based on the necessary drive torque **220** and the available drive torque **240**, a drive torque reference **250** is determined by the torque reference selection **120**, where the drive torque reference has been selected based on determinations made regarding time to surge of the individual compressors.

As will be seen in the following, the above-mentioned principle might be realized in a number of different variations, mainly depending on the questions:

- what signals are available

- which model is used for the load side and the line side

- is the decision taken centrally for the whole plant or locally for each compressor?

The exact implementation is mainly determined by the amount of knowledge of the whole system, and by the question if the control is centralized or decentralized.

Now two further embodiments will be described in more detail. A large number of variations of the two embodiments are possible.

In a second embodiment, where fig. 5 and 6 are also used, the torque references of all compressors are chosen by the main control unit 24, which has full knowledge of the dynamics of the whole compressor station 10 and the grid 1.

Thus process signals 200 of all compressors are available to the main control unit 24, including rotational speed of the compressor, mass flow, pressure ratio between inflow and outflow of the compressor. The load side model 100 includes the dynamics of each compressor, which is e.g. of the form described in section 2.1 of "Dynamic Time to Surge Computation for Electric Driven Gas Compressors during Voltage Dips", Cortinovis et al, Proceedings of IFAC Symposium on Dynamics and Control of Process Systems (DYCOPS), 2016., where a number of dynamic differential equations for suction pressure $p_s$ before the compressor, discharge pressure $d_p$ after the compressor, compressor flow $q_c$ and compressor speed $\omega$.

This mathematical model can be used to predict the evolution of the compressor's operating point as a function of the drive torque, and is aware of the conditions which might lead to surge conditions. Interconnections of the pipe systems of the compressors are included in the load side model 100. The load side model can be expressed as a discrete time model mapping the process signals p (200) and the torque references $T_{ref}$ 250 to the evolution of internal load side states x and to the time-to-surge values $t_{surge}$. The internal load side states x might reflect continuous quantities such as the rotational speed, the pressure ratio or the mass flow of the compressors. Denoting the discrete-time instance by k, the load side model 100 can be stated as

$$x_{k+1} = f_{Load}(x_k, p_k, T_{ref,k}) \qquad (1a)$$

$$t_{surge} = g_{Load}(x_k, p_k, T_{ref,k}) \qquad (1b)$$

Electric quantities **230** are measured on the grid side of the VSDs, and a disturbance is detected, for instance in the form of a voltage dip. Then an estimate of the type and shape of the grid disturbance is taken. A line side model **110** is based on this estimate. The line side model **110** reflects that the drive torque applied to the drive shaft of the compressor is related to the amount of current drawn out of the electric grid on the line side of the VSD.

The amount of current drawn out of the grid influences the voltage on the line side of the VSD, which in return influences the operation of the VSD, and thus the available drive torque. Since the VSDs are coupled on the grid side, a decision for one drive torque will also have an impact on the other VSDs, which, in the ideal case, is also reflected in the line side model **110**. Denoting internal line side states by z, the maximally available torque by *Tmax,* and the measurements by m, the line side model can be stated as

$$z_{k+1} = f_{Line}(z_k, m_k, T_{ref,k}) \qquad (2a)$$

$$T_{max,k+1} = g_{Line}(z_k, m_k, T_{ref,k}) \qquad (2b)$$

The internal states z might reflect continuous electric quantities such as the voltage or the current, the maximally available drive torque, or integer variables denoting e.g. the type of grid disturbance.

In the ideal case the load side model **100** and the line side model **110** can be included in a torque reference selection **120** as part of a mathematical optimization procedure. This means that the determining of the total available power for the variable speed drives during the disturbance and the obtaining of a measure, for each compressor, of power requirements for continuing operation during the disturbance are made as a part of an optimization. In this optimization procedure the torque references **250** are determined which maximize the time to surge **210** for as many compressors as possible, given the current measurements from the process side **200** and the line side **230**, and considering the relations defined by the load side model **100** and the line side model **110**. In the ideal case a trajectory of torque references will be computed in the optimization procedure. The optimization procedure might be stated as:

$$
\begin{array}{lll}
\text{maximize} & \text{Sum } (t_{surge}) & (3a) \\
\text{s.t.} & x_{k+1} = f_{Load}(x_k, p_k, T_{ref,k}),\ k = 0,...,N & (3b) \\[6pt]
& t_{surge} = g_{Load}(x_k, p_k, T_{ref,k}), & (3c) \\
& z_{k+1} = f_{Line}(z_k, m_k, T_{ref,k}),\ k = 0,...,N & (3d) \\
& T_{max,k+1} = g_{Line}(z_k, m_k, T_{ref,k}),\ k = 0,...,N & (3e) \\
& T_{ref,k} <= T_{max,k},\ k = 0,...,N & (3f)
\end{array}
$$

A shutdown decision may be taken if the predicted time to surge is less than a surge threshold value. A shutdown may thus be decided if a continued operation measure is below a corresponding measure threshold. In that case a command is sent to open the hotgas recycle valve, and the reference torque for this compressor is set to zero. It can thereby be seen that a maximum number of drive torques corresponding to the maximized time-surge values above the measure threshold are selected, while time-to surge values below a threshold are left out. Thereby the power usage of the selected drive torques are within the total available power. It can also be seen that the mathematical model of the load side of the VSD is employed to predict the evolution of the time-to-surge as a function of the drive torque, and that this prediction is used as input to the decisions on the shut-down and/or the torque references. The mathematical model of the load side of the VSD may also consider two or more compressors and potentially their interactions. The mathematical model of the line side of the VSD may furthermore establish a relationship between the operation point of the VSD and the available drive torque, given the measurements or estimates of the electric grid quantity, and the relation is used as input to the decisions on the shut-down and/or the torque references.

A third embodiment, may be derived from the case elaborated above by approximations, either in terms of the mathematical models applied, or in terms of the available signals, or by using heuristic approaches replacing the need of specific models. Together with a deviation from the ideal case, a degradation of the quality of the selected torque references are to be expected.

As the third embodiment a hybrid centralized/decentralized implementation of the control solution is described, where the main control unit 24 and the local control units 25A, 25B and 25C are both used. Here it is possible that the centralized control unit 24 is hosted on one of the decentralized controllers (local control units) acting as a master controller, with all decentralized controllers being hosted on the variable speed drive control platforms. The reason for this choice is the most direct access to the fast changing critical values such as the applied torque to the compressors, which are readily available locally at each compressor without relying on any additional communication channels.

The control solution comprises two phases of operation, namely a normal operation phase and the undervoltage operation phase. The normal operation is depicted in Figure 6. The local control units, which are disturbance determining control units, in this case estimate the measures of power requirements for continued operation such as time-to-surge values or time-to surge distances. Here the individual compressor drive controllers 25A, 25B and 25C compute, 300, using a load side model 310 and using process measurements 312 a time to surge value $t_{surge}$ under the assumption of zero-torque throughout the time to surge computation horizon in a decentralized fashion. Next the computed zero-torque time to surge values are broadcast to a controller acting as a central node, which may be the main control unit 24. The central node then arranges the obtained torque requirements information for various total available power scenarios. A mathematical model of the line side of the VSD may more particularly establish a relationship between the operation points of each VSD and a corresponding available drive torque, given an assumption of the future evolution of the electric grid quantity, where this assumption may be based on previous measurements and estimates of the electric grid quantity, and/or on historical data. Based on such a model and assumption, the central node may then sort 314 the time to surge values $t_{surge}$ and determine, either based on an offline computed solution or based on online optimization, the number of compressors to attempt a maximum possible partial torque ride-through for a given undervoltage level in the form of a chart. The total available power is in this case indicated through using a voltage level (in percent) below a nominal voltage. It may then investigate different voltage level thresholds V1, V2 and V3 and determine the number of compressors that are to be operated for fault ride-through based on which thresholds have been crossed. This number is then a number of selectable drive torques the power usage of which are within the total available power for a disturbance. In one particular implementation the assumption may be that all remaining compressors will attempt a zero-torque ride-through in the event of an undervoltage. To illustrate this basic idea further the ride-through strategy chart will have for example for a compressor group with 5 machines two columns with entries such as:

TABLE I

| Voltage level | Number of compressors with max partial torque ride-through |
|---|---|
| 100% to 80% | 4 |
| 80% to 50% | 3 |
| 50% to 0% | 2 |

In this particular example this chart is assumed to be dependent on the operating conditions of the individual compressors as a whole, which are reflected in the individual time to surge values. This means that if the compressors are mostly operating at part load or with large distances to surge, more compressors might be selected to undergo a maximum partial torque ride-through for the same undervoltage level in comparison to a case, where most compressors are at full load and with small distances to surge.

In the next step the central node broadcasts 316 back to all individual controllers the ride-through strategy chart as well as the ranking of the time to surge values, which are updated and stored locally. The steps are repeated 318 with new process data at a slow sampling rate e.g. every is. The control node thus indicates to the local control nodes the order in which drive torques are to be selected for various available power scenarios

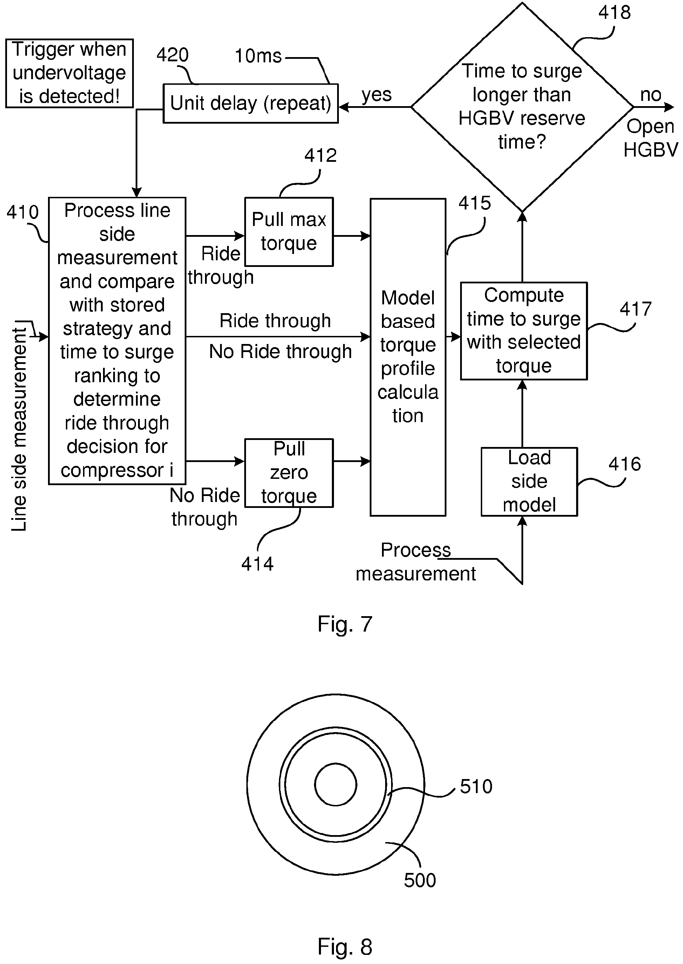

Undervoltage, i.e. a disturbance in the electrical power supply system, can be detected by the local control units 25A, 25B and 25C based on local measurements via an undervoltage detection scheme running at a sufficiently high frequency. Once undervoltage conditions are detected at an individual compressor, the control unit controlling that compressor will start and continue to carry out the scheme shown in Figure 7. The sequence starts with a step 410, where it is determined, using line side measurements, what the voltage level is and - from the ride-through strategy chart - how many compressors will carry out a maximum partial torque ride-through. Using the most up to date ranking of zero-torque time to surge values from all other compressors stored in the local system, the individual controller is able to determine, if it should attempt a maximum partial torque ride-through, step 412, or if no ride through is to be made, step 414, in which case a zero torque is pulled. Once this decision is made locally, the local control unit then calculates, in step 416, the most likely torque profile for the near future preferably using model based principles. This torque profile is then used to calculate, in step 417 and after a model based torque profile calculation, step 415, the current time to surge value, using most up to date process measurement, the load side model 416 and the selected torque. If the time to surge value is lower than a critical threshold, step 418, the hot gas bypass valve (HGBV) is opened to protect the system. If the inverse is true, step 418, the system will continue repeating, step 420, the above mentioned steps at a sufficiently high frequency e.g. every 10 ms to ensure the timely opening of the HGBV, if it is needed. It could be the case that the ride-through strategy and the ranking of the time to surge values of all compressors are updated during the undervoltage event depending on the duration and sequence of the sampling instances. The scheme in Figure 7 will stop, if local voltage measurement returns to nominal conditions. As all local control units will be able to detect a disturbance, know their own determined surge value and have the scheme, i.e. have knowledge about the allowed number of compressors for the different disturbances, they will select a drive torque of pre-determined size based on if the time-to-surge value is above a threshold corresponding to the number of allowed compressors. A number of drive torques that are within the available amount of power will thus be selected and applied in a decentralized way by the individual local control units base.

There are a number of ways in which the above described embodiments may be varied.

The load side model **100** may comprise only the model of a single compressor, without any interactions due to the piping system. Moreover, it is possible that the load side model **100** only includes a simplified model of the load side, for instance only a model of the drive shaft, and considers only mechanical signals instead of process signals **200.** The load side model **100** may furthermore only include a pre-calculated time to surge value based on offline computed lookup tables, e.g. a linear function of the surge distance. Another possible variation is that the line side model **110** only includes a simplified model of the line side, for instance only a model of the VSD and/or the transformer. Moreover, it is possible that the line side model **110** only includes the model of a single VSD, without any interactions to the other VSDs. The line side model 110 may furthermore lack dynamics but only comprise a static relation between the electric quantities The time evolution of the available external electric power during disturbances may be predicted by the line side model via a statistical model that takes into account the history of previous power dips. The optimization routine in the torque reference selection **120** may maximize a different objective, e.g. the minimization of the necessary drive torque. In the torque reference selection 120 it is furthermore possible to only determine a constant torque reference instead of a torque reference trajectory. It is also possible that other defining means for the operation of the VSDs are determined by the torque reference selection **120** than torque reference. Such means could be currents or voltages, or speeds of the drive shafts. Additionally it is possible that the torque references **250** are not determined by an optimization algorithms, but by means of a heuristic approach. Instead of solving the optimization problem (3), models **100** (1) and **110** (2) could be used to establish a set of heuristic rules which supply torque references *Tref.*

The operating points of the compressors may be optimized using the load and line side models to be more resilient against expected grid disturbances - for example by operating a number of compressors away from surge conditions and others closer to surge conditions and making the electric power available only to the compressors away from surge to provide a higher chance of successful ride-through for these compressors.

The control units may be provided in the form of computer program code in a program memory. This computer program code performs the functionality of the control unit when being run by a processor. This computer program code may also be provided on a data carrier which performs the functionality of the excitation arrangement when being loaded into such a program memory. Fig. 8 schematically shows one such data carrier 500, in the form of a CD-ROM disc, which data carrier carries computer program code 510 for performing the activities of the control unit.

From the foregoing discussion it is evident that the present invention can be varied in a multitude of ways. It shall consequently be realized that the present invention is only to be limited by the following claims.

## Claims

1. A method for controlling a group of compressors (13A, 13B, 13C) in a compressor station (10), powered by an electrical power supply system (1), in case of disturbances in the electrical power supply system, each compressor being run by an electrical variable speed drive (23A, 23B, 23C) providing a drive torque for the compressor, the method comprising the steps of:

   determining (34) a total available power for the variable speed drives during the disturbance in the electrical power supply system, and
   selecting (38) a number of drive torques for operating at least some of the compressors during the disturbance such that the power used for obtaining the selected drive torques is within the total available power, and
   selecting a number of compressors to shut down during the disturbance.

2. The method according to claim 1, further comprising:
   obtaining (36) a measure, for each compressor, of power requirements for continuing operation during the disturbance, and where the selecting of a number of drive torques is based on said measure.

3. The method according to claim 2, wherein the measure of power requirements for continuing operation of a compressor during the disturbance is a measure related to surge of the compressor, such as time-to-surge or surge distance.

4. The method according to claim 2 or 3, wherein the measures of power requirements for continued operation have been determined based on heuristics or a mathematical model of the group of compressors.

5. The method according to any of claims 2 - 4, wherein the selection of drive torque for a compressor is made based on the measure of power requirements for continued operation of the individual compressor and a number of selectable drive torques the power usage of which are within the total available power.

6. The method according to any previous claim, wherein the selecting comprises selecting the maximum number of drive torques the power usage of which is within the total available power.

7. The method according to any previous claim, further comprising determining (30) the disturbance and estimating (32) the length of the disturbance based on measured power supply system quantities.

8. The method according to any previous claim, further comprising estimating the total amount of available drive torque based on a mathematical model of the electric power system.

9. The method according to claim 8 when depending on claim 2, wherein the measures of power requirements for continued operation have been determined based on a mathematical model and further comprising optimizing the measure using the mathematical models where the selected drive torques are the drive torques associated with optimized surge measures above a measure threshold.

10. A control arrangement for controlling a group of compressors (13A, 13B, 13C) in a compressor station (10), powered by an electrical power supply system (1), in case of disturbances in the electrical power supply system, each compressor being run by an electrical variable speed drive (23A, 23B, 23C) providing a drive torque for the compressor, said control arrangement comprising a main control unit (24) operable to:

   determine a total available power for the variable speed drives during a disturbance in the electrical power supply system, and
   select a number of drive torques for operating at least some of the compressors during the disturbance such that the power used for obtaining the selected drive torques is within the total available power, and
   select a number of compressors to shut down during the disturbance.

11. The control arrangement according to claim 10, wherein the main control unit is further configured to obtain a measure, for each compressor, of power requirements for continuing operation during the disturbance, and when being configured to select a number of drive torques is configured to select these drive torques based on said measure.

12. The control arrangement according to claim 11, wherein the measures of power requirements for continued operation have been determined based on heuristics or a mathematical model of the group of compressors.

13. The control arrangement according to any of claims 10 - 12, wherein the main control unit (24) when selecting a number of drive torques is configured to select the maximum number of drive torques, the power usage of which is within the total available power.

14. The control arrangement according to any of claims 10 - 13, wherein the main control unit (24) is configured to estimate the total amount of available drive torque based on a mathematical model of the electric power system.

15. The control arrangement according to claim 14 when depending on claim 11, wherein the measures of power requirements for continued operation have been determined based on a mathematical model and the main control unit (24) is further configured to optimize the measure using the mathematical models and the selected drive torques are the drive torques associated with optimized surge measures above a measure threshold.

16. The control arrangement according to claim 15, wherein the main control unit (24) is further operative to detect the disturbance and determine the measures for the compressors.

17. The control arrangement according to any of claims 10 - 14, further comprising a number of local control units (25A, 25B, 25C), one for each compressor, configured to detect the disturbance, determine a measure and apply a selected drive torque based on the determined measure.

18. The control arrangement according to claim 17 when depending on claim 11, wherein the main control unit, when selecting drive torque for a compressor, is configured to select drive torque based on the measure of power requirements for continued operation of the individual compressor and a number of selectable drive torques the power usage of which are within the total available power and the local control units are configured to apply selected drive torque also based on said number.

19. A computer program product for controlling a group of compressors (13A, 13B, 13C) in a compressor station (10), powered by an electrical power supply system (1), in case of disturbances in the electrical power supply system, each compressor being run by an electrical variable speed drive (23A, 23B, 23C) providing a drive torque for the compressor, the computer program product comprising a data carrier (130) with computer program code (132) being loadable into one or more internal memories associated with one or more processors, said computer program code causing said one or more processors to, when being loaded in said one or more internal memory, determine a total available power for the variable speed drives during a disturbance in the electrical power supply system, select a number of drive torques for operating at least some of the compressors during the disturbance such that the power used for obtaining the selected drive torques is within the total available power, and select a number of compressors to shut down during the disturbance.


**Patentansprüche**

1. Verfahren zum Steuern einer Gruppe von Kompressoren (13A, 13B, 13C) in einer Kompressorstation (10), die von einem Elektroenergieversorgungssystem (1) versorgt wird, wobei bei Störungen in dem Elektroenergieversorgungssystem jeder Kompressor durch einen elektrischen drehzahlvariablen Antrieb (23A, 23B, 23C) betrieben wird, der ein Drehmoment für den Kompressor bereitstellt, wobei das Verfahren folgende Schritte umfasst:

   Bestimmen (34) einer insgesamt verfügbaren Energie für die drehzahlvariablen Antriebe während der Störung in dem Elektroenergieversorgungssystem und
   Auswählen (38) einer Anzahl von Antriebsdrehmomenten zum Betreiben mindestens einiger der Kompressoren während der Störung derart, dass die Energie, die zum Erzielen der ausgewählten Antriebsdrehmomente verwendet wird, innerhalb der insgesamt verfügbaren Energie liegt, und
   Auswählen einer Anzahl von Kompressoren zum Abschalten während der Störung.

2. Verfahren nach Anspruch 1, ferner umfassend:
   Erzielen (36) eines Messwerts von Energieanforderungen zum Fortsetzen des Betriebes während der Störung für jeden Kompressor und wobei das Auswählen einer Anzahl von Antriebsdrehmomenten auf dem Messwert basiert.

3. Verfahren nach Anspruch 2, wobei der Messwert von Energieanforderungen zum Fortsetzen des Betriebes eines Kompressors während der Störung ein Messwert ist, der sich auf ein Pumpen des Kompressors bezieht, wie beispielsweise einer Zeit bis zum Pumpen (Time To Surge) oder einem Pumpabstand (Surge Distance).

4. Verfahren nach Anspruch 2 oder 3, wobei die Messwerte von Energieanforderungen für den fortgesetzten Betrieb basierend auf Heuristik oder einem mathematischen Modell der Gruppe von Kompressoren bestimmt wurden.

5. Verfahren nach einem der Ansprüche 2 bis 4, wobei die Auswahl von Antriebsdrehmoment für einen Kompressor basierend auf dem Messwert von Energieanforderungen für den fortgesetzten Betrieb des einzelnen Kompressors und einer Anzahl auswählbarer Antriebsdrehmomente, deren Energieverwendung innerhalb der insgesamt verfügbaren Energie liegt, vorgenommen wird.

6. Verfahren nach einem vorhergehenden Anspruch, wobei das Auswählen das Auswählen der maximalen Anzahl von Antriebsdrehmomenten, deren Energieverwendung innerhalb der insgesamt verfügbaren Energie liegt, umfasst.

7. Verfahren nach einem vorhergehenden Anspruch, ferner das Bestimmen (30) der Störung und das Schätzen (32) der Länge der Störung basierend auf gemessenen Quantitäten des Energieversorgungssystems umfassend.

8. Verfahren nach einem vorhergehenden Anspruch, ferner das Schätzen des Gesamtumfangs verfügbaren Antriebsdrehmoments basierend auf einem mathematischen Modell des Elektroenergiesystems umfassend.

9. Verfahren nach Anspruch 8, wenn abhängig von Anspruch 2, wobei die Messwerte von Energieanforderungen für den fortgesetzten Betrieb basierend auf einem mathematischen Modell bestimmt wurden und ferner das Optimieren des Messwertes mit Hilfe der mathematischen Modelle umfassend, wobei die ausgewählten Drehmomente die Antriebsdrehmomente sind, die zu optimierten Pumpmesswerten über einem Messungsgrenzwert gehören.

10. Steueranordnung zum Steuern einer Gruppe von Kompressoren (13A, 13B, 13C) in einer Kompressorstation (10), die von einem Elektroenergieversorgungssystem (1) versorgt wird, wobei bei Störungen in dem Elektroenergieversorgungssystem jeder Kompressor durch einen elektrischen drehzahlvariablen Antrieb (23A, 23B, 23C) betrieben wird, der ein Drehmoment für den Kompressor bereitstellt, wobei die Steueranordnung eine Hauptsteuereinheit (24) umfasst, die für folgendes funktionsfähig ist:

   Bestimmen einer insgesamt verfügbaren Energie für die drehzahlvariablen Antriebe während einer Störung in dem Elektroenergieversorgungssystem und
   Auswählen einer Anzahl von Antriebsdrehmomenten zum Betreiben mindestens einiger der Kompressoren während der Störung derart, dass die Energie, die zum Erzielen der ausgewählten Antriebsdrehmomente verwendet wird, innerhalb der insgesamt verfügbaren Energie liegt, und
   Auswählen einer Anzahl von Kompressoren zum Abschalten während der Störung.

11. Steueranordnung nach Anspruch 10, wobei die Hauptsteuereinheit ferner dafür konfiguriert ist, für jeden Kompressor einen Messwert von Energieanforderungen zum Fortsetzen des Betriebes während der Störung zu erzielen und wenn sie für das das Auswählen einer Anzahl von Antriebsdrehmomenten konfiguriert ist, dafür konfiguriert ist, diese Antriebsdrehmomente basierend auf dem Messwert auszuwählen.

12. Steueranordnung nach Anspruch 11, wobei die Messwerte von Energieanforderungen für den fortgesetzten Betrieb basierend auf Heuristik oder einem mathematischen Modell der Gruppe von Kompressoren bestimmt wurden.

13. Steueranordnung nach einem der Ansprüche 10 bis 12, wobei die Hauptsteuereinheit (24) beim Auswählen einer Anzahl von Antriebsdrehmomenten dafür konfiguriert ist, die maximale Anzahl von Antriebsdrehmomenten, deren Energieverwendung innerhalb der insgesamt verfügbaren Energie liegt, auszuwählen.

14. Steueranordnung nach einem der Ansprüche 10 bis 13, wobei die Hauptsteuereinheit (24) dafür konfiguriert ist, den Gesamtumfang verfügbaren Antriebsdrehmoments basierend auf einem mathematischen Modell des Elektroenergiesystems zu schätzen.

15. Steueranordnung nach Anspruch 14, wenn abhängig von Anspruch 11, wobei die Messwerte von Energieanforderungen für den fortgesetzten Betrieb basierend auf einem mathematischen Modell bestimmt wurden und die Hauptsteuereinheit (24) ferner dafür konfiguriert ist, den Messwert mit Hilfe der mathematischen Modelle zu optimieren und die ausgewählten Drehmomente die Antriebsdrehmomente sind, die zu optimierten Pumpmesswerten über einem Messungsgrenzwert gehören.

16. Steueranordnung nach Anspruch 15, wobei die Hauptsteuereinheit (24) ferner funktionsfähig ist, die Störung zu erkennen und die Messwerte für die Kompressoren zu bestimmen.

17. Steueranordnung nach einem der Ansprüche 10 bis 14, ferner eine Anzahl von lokalen Steuereinheiten (25A, 25B, 25C) umfassend, für jeden Kompressor eine, die dafür konfiguriert sind, die Störung zu erkennen, einen Messwert zu bestimmen und basierend auf dem bestimmten Messwert ein ausgewähltes Antriebsdrehmoment anzuwenden.

18. Steueranordnung nach Anspruch 17, wenn abhängig von Anspruch 11, wobei die Hauptsteuereinheit beim Auswählen eines Antriebsdrehmoments für einen Kompressor dafür konfiguriert ist, das Antriebsdrehmoment basierend auf dem Messwert von Energieanforderungen für den fortgesetzten Betrieb des einzelnen Kompressors und einer Anzahl von auswählbaren Antriebsdrehmomenten, deren Energieverwendung innerhalb der insgesamt verfügbaren Energie liegt, auszuwählen, und die lokalen Steuereinheiten dafür konfiguriert sind, das ausgewählte Drehmoment ebenfalls basierend auf der Anzahl anzuwenden.

19. Computerprogrammprodukt zum Steuern einer Gruppe von Kompressoren (13A, 13B, 13C) in einer Kompressorstation (10), die von einem Elektroenergieversorgungssystem (1) versorgt wird, wobei bei Störungen in dem Elektroenergieversorgungssystem jeder Kompressor durch einen elektrischen drehzahlvariablen Antrieb (23A, 23B, 23C) betrieben wird, der ein Drehmoment für den Kompressor bereitstellt, wobei das Computerprogrammprodukt einen Datenträger (130) mit Computerprogrammcode (132) umfasst, der in einen oder mehrere interne Speicher geladen werden kann, die zu einem oder mehreren Prozessoren gehören, wobei der Computerprogrammcode, wenn er in den einen oder die mehreren internen Speicher geladen ist, den einen oder die mehreren Prozessoren zu Folgendem veranlasst:

Bestimmen einer insgesamt verfügbaren Energie für die drehzahlvariablen Antriebe während der Störung in dem Elektroenergieversorgungssystem,

Auswählen einer Anzahl von Antriebsdrehmomenten zum Betreiben mindestens einiger der Kompressoren während der Störung derart, dass die Energie, die zum Erzielen der ausgewählten Antriebsdrehmomente verwendet wird, innerhalb der insgesamt verfügbaren Energie liegt, und

Auswählen einer Anzahl von Kompressoren zum Abschalten während der Störung.

## Revendications

1. Procédé de commande d'un groupe de compresseurs (13A, 13B, 13C) dans une station (10) de compresseurs, alimentée par un système d'alimentation électrique (1), en cas de perturbations dans le système d'alimentation électrique, chaque compresseur étant piloté par un entraînement électrique à vitesse variable (23A, 23B, 23C) fournissant un couple d'entraînement pour le compresseur, le procédé comprenant les étapes suivantes :

   la détermination (34) d'une puissance totale disponible pour les entraînements à vitesse variable au cours de la perturbation dans le système d'alimentation électrique, et

   la sélection (38) d'un certain nombre de couples d'entraînement pour faire fonctionner au moins certains des compresseurs au cours de la perturbation de telle manière que la puissance consommée pour obtenir les couples d'entraînement sélectionnés s'inscrive dans la puissance totale disponible, et

   la sélection d'un certain nombre de compresseurs à mettre à l'arrêt au cours de la perturbation.

2. Procédé selon la revendication 1, comprenant en outre :
   l'obtention (36) d'une mesure, pour chaque compresseur, de besoins en puissance pour un fonctionnement ininterrompu au cours de la perturbation, et la sélection d'un certain nombre de couples d'entraînement étant basée sur ladite mesure.

3. Procédé selon la revendication 2, dans lequel la mesure de besoins en puissance pour un fonctionnement ininterrompu d'un compresseur au cours de la perturbation est une mesure liée au pompage du compresseur, notamment le temps jusqu'au pompage ou la distance jusqu'au pompage.

4. Procédé selon la revendication 2 ou 3, dans lequel les mesures de besoins en puissance pour un fonctionnement ininterrompu ont été déterminées sur la base d'heuristiques ou d'un modèle mathématique du groupe de compresseurs.

5. Procédé selon l'une quelconque des revendications 2 à 4, dans lequel la sélection d'un couple d'entraînement pour un compresseur s'effectue sur la base de la mesure de besoins en puissance pour un fonctionnement ininterrompu du compresseur individuel et d'un certain nombre de couples d'entraînement sélectionnables dont la consommation de puissance s'inscrit dans la puissance totale disponible.

6. Procédé selon l'une quelconque des revendications précédentes, dans lequel la sélection comprend la sélection du nombre maximal de couples d'entraînement dont la consommation de puissance s'inscrit dans la puissance totale disponible.

7. Procédé selon l'une quelconque des revendications précédentes, comprenant en outre la détermination (30) de la perturbation et l'estimation (32) de la longueur de la perturbation sur la base de quantités mesurées du système d'alimentation.

8. Procédé selon l'une quelconque des revendications précédentes, comprenant en outre l'estimation de la quantité totale de couple d'entraînement disponible sur la base d'un modèle mathématique du système d'énergie électrique.

9. Procédé selon la revendication 8 lorsqu'elle dépend de la revendication 2, dans lequel les mesures de besoins en puissance pour un fonctionnement ininterrompu ont été déterminées sur la base d'un modèle mathématique, et comprenant en outre l'optimisation de la mesure au moyen des modèles mathématiques, les couples d'entraînement sélectionnés étant les couples d'entraînement associés à des mesures de pompage optimisées au-delà d'un seuil de mesure.

10. Agencement de commande pour commander un groupe de compresseurs (13A, 13B, 13C) dans une station (10) de compresseurs, alimentée par un système d'alimentation électrique (1), en cas de perturbations dans le système d'alimentation électrique, chaque compresseur étant piloté par un entraînement électrique à vitesse variable (23A, 23B, 23C) fournissant un couple d'entraînement pour le compresseur, ledit agencement de commande comprenant une unité de commande principale (24) permettant de :

déterminer une puissance totale disponible pour les entraînements à vitesse variable au cours d'une perturbation dans le système d'alimentation électrique, et

sélectionner un certain nombre de couples d'entraînement pour faire fonctionner au moins certains des compresseurs au cours de la perturbation de telle manière que la puissance consommée pour obtenir les couples d'entraînement sélectionnés s'inscrive dans la puissance totale disponible, et

sélectionner un certain nombre de compresseurs à mettre à l'arrêt au cours de la perturbation.

11. Agencement de commande selon la revendication 10, dans lequel l'unité de commande principale est configurée en outre pour obtenir une mesure, pour chaque compresseur, de besoins en puissance pour un fonctionnement ininterrompu au cours de la perturbation et, lorsqu'elle est configurée pour sélectionner un certain nombre de couples d'entraînement, est configurée pour sélectionner ces couples d'entraînement sur la base de ladite mesure.

12. Agencement de commande selon la revendication 11, dans lequel les mesures de besoins en puissance pour un fonctionnement ininterrompu ont été déterminées sur la base d'heuristiques ou d'un modèle mathématique du groupe de compresseurs.

13. Agencement de commande selon l'une quelconque des revendications 10 à 12, dans lequel l'unité de commande principale (24), lorsqu'elle sélectionne un certain nombre de couples d'entraînement, est configurée pour sélectionner le nombre maximal de couples d'entraînement dont la consommation de puissance s'inscrit dans la puissance totale disponible.

14. Agencement de commande selon l'une quelconque des revendications 10 à 13, dans lequel l'unité de commande principale (24) est configurée pour estimer la quantité totale de couple d'entraînement disponible sur la base d'un modèle mathématique du système d'énergie électrique.

15. Agencement de commande selon la revendication 14 lorsqu'elle dépend de la revendication 11, dans lequel les mesures de besoins en puissance pour un fonctionnement ininterrompu ont été déterminées sur la base d'un modèle mathématique, et l'unité de commande principale (24) est configurée en outre pour optimiser la mesure au moyen des modèles mathématiques, et les couples d'entraînement sélectionnés sont les couples d'entraînement associés à des mesures de pompage optimisées au-delà d'un seuil de mesure.

16. Agencement de commande selon la revendication 15, dans lequel l'unité de commande principale (24) a en outre pour fonction de détecter la perturbation et déterminer les mesures pour les compresseurs.

17. Agencement de commande selon l'une quelconque des revendications 10 à 14, comprenant en outre un certain nombre d'unités de commande locales (25A, 25B, 25C), une pour chaque compresseur, configurées pour détecter la perturbation, déterminer une mesure et appliquer un couple d'entraînement sélectionné sur la base de la mesure déterminée.

18. Agencement de commande selon la revendication 17 lorsqu'elle dépend de la revendication 11, dans lequel l'unité de commande principale, lorsqu'elle sélectionne un couple d'entraînement pour un compresseur, est configurée pour sélectionner un couple d'entraînement sur la base de la mesure de besoins en puissance pour un fonctionnement ininterrompu du compresseur individuel et d'un certain nombre des couples d'entraînement sélectionnables dont la consommation de puissance s'inscrit dans la puissance totale disponible, et les unités de commande locales sont configurées pour appliquer le couple d'entraînement sélectionné également sur la base dudit nombre.

**19.** Produit-programme d'ordinateur pour commander un groupe de compresseurs (13A, 13B, 13C) dans une station (10) de compresseurs, alimentée par un système d'alimentation électrique (1), en cas de perturbations dans le système d'alimentation électrique, chaque compresseur étant piloté par un entraînement électrique à vitesse variable (23A, 23B, 23C) fournissant un couple d'entraînement pour le compresseur, le produit-programme d'ordinateur comprenant un support de données (130) pourvu d'un code de programme d'ordinateur (132) susceptible d'être chargé dans une ou plusieurs mémoires internes associées à un ou plusieurs processeurs, ledit code de programme d'ordinateur amenant lesdits un ou plusieurs processeurs, lorsqu'il est chargé dans lesdites une ou plusieurs mémoires internes, à

déterminer une puissance totale disponible pour les entraînements à vitesse variable au cours d'une perturbation dans le système d'alimentation électrique,

sélectionner un certain nombre de couples d'entraînement pour faire fonctionner au moins certains des compresseurs au cours de la perturbation de telle manière que la puissance consommée pour obtenir les couples d'entraînement sélectionnés s'inscrive dans la puissance totale disponible, et

sélectionner un certain nombre de compresseurs à mettre à l'arrêt au cours de la perturbation.

Fig. 1

Fig. 2

| Determine disturbance in grid | 30 |
| Estimate disturbance duration | 32 |
| Determine total available power | 34 |
| Obtain power requirement measures | 36 |
| Select a number of drive torques within the available power and based on measure | 38 |

Fig. 3

Fig. 4

210
100
200
Load side
model

110
230
Line side
model

120
220
240
Torque
Ref Sel.

250

Fig. 5

300
Compute time
to surge with
zero torque

314
Sort time to surge
values and determine
ride through strategy

316
Store time to
surge ranking
and strategy

310
Load side
model

Process
measurements

312

E.g.
If V2<V<V1 ride through n1 compressors
If V3<V<V2 ride through n2 compressors
If 0<V<V3 ride through n3 compressors

318
Unit delay
(repeat)

Fig. 6

Fig. 7

Fig. 8

**EP 3 339 653 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100257895 A

- WO 2015028242 A

### Non-patent literature cited in the description

- Power loss ride-through in a variable speed drive system. **WYMANN et al.** PCIC Europe AM-07. IEEE, 2014
- **BESSELMANN THOMAS et al.** Partial torque ride through with model predictive control. *Petroleum and Chemical Industry Conference European (PCIC) Europe,* 14 June 2016

- **CORTINOVIS et al.** Dynamic Time to Surge Computation for Electric Driven Gas Compressors during Voltage Dips. *Proceedings of IFAC Symposium on Dynamics and Control of Process Systems (DYC-OPS),* 2016